# EUROPEAN PATENT SPECIFICATION

(11) **EP 4 382 847 B1**
(45) Date of publication and mention of the grant of the patent: **10.09.2025**
(21) Application number: 22211359.9
(22) Date of filing: 05.12.2022
(51) Int. Cl.: F28F 9/02, F28D 7/16, F28F 9/00

(54) **A HEAT EXCHANGER FOR VEHICLES**
WÄRMETAUSCHER FÜR FAHRZEUGE
ECHANGEUR DE CHALEUR POUR VEHICULES

(43) Date of publication of application: 12.06.2024
(73) Proprietor: VALEO SYSTEMES THERMIQUES, 78320 Le Mesnil Saint-Denis (FR)
(72) Inventor: JURKIEWICZ, Damian, 32 050 Skawina (PL); BELZOWSKI, Michal, 32 050 Skawina (PL); SZOSTEK, Dawid, 32 050 Skawina (PL)
(74) Representative: Valeo Powertrain Systems

(56) References cited:
- EP-A1- 3 550 250
- CN-A- 112 431 664
- DE-A1- 102017 111 409
- US-A1- 2008 223 562

## Description

### FIELD OF INVENTION

The present invention relates to heat exchangers, more specifically, the present invention relates to an improved and efficient chiller for vehicles.

### BACKGROUND

In hybrid and pure electric vehicles, heat exchanger such as chillers are used for cooling of power electronics and battery packs powering such vehicles along with a Heating Ventilation and Air Conditioning (HVAC) system. For instance, such a heat exchanger can operate either as a R744 refrigerant-cooled water chiller or as a gas cooler using R744 refrigerant depending on the requirements.

A conventional R744 chiller include a housing that encapsulates components of a heat exchanger core that are involved in heat exchange between a coolant/refrigerant and a fluid to be cooled down. The conventional housing includes a first half-shell and a second half-shell. Besides, the housing is made of plastic materials and all the components contained therein are protected effectively against corrosion. However, the existing housing of the conventional chiller is associated with several drawbacks, for example, to ensure that the housing is fluid-tight sealing means, such as gaskets, are provided between the two half-shells of the housing and at other adjoining interfaces of metal and non-metal pats of the heat exchanger such as between the a connection block and the housing, which increases assembly time and assembly cost. In addition, as the housing is made of plastic, it requires different moulds of specific dimensions for the two half-shells of different shapes and sizes, which increases tooling cost. Furthermore, to join the two half-shells of the housing, it requires ultrasonic plastic welding, which increases overall manufacturing cost.

The examples of such heat exchangers are dislosed in documents [US2008223562], [CN112431664], [DE102017111409] and [EP3550250]. Moreover, the conventional housing is complex and ribs are provided on outer surfaces of the two half-shells for strengthening, which requires more packaging space in the vehicle.

Therefore, there is a need for an efficient heat exchanger, which can overcome the abovementioned drawback associated with the housing of the conventional heat exchanger.

### SUMMARY

The present invention discloses a heat exchanger, such as but not limited to a chiller, with an improved housing defined through housing plates and closing plates, to encapsulate a heat exchanger core of the chiller, which can overcome drawback of the conventional plastic housing of the existing chiller. In addition, the present invention proposes flat-to-flat connection between housing plates, header plates, and closing plates, which ensure no fluid leakage through the housing.

A heat exchanger according to the invention is defined in claim 1. The heat exchanger includes a pair of header plates including a first header plate and a second header plate configured spaced apart from the first header plate, each of the first and second header plates includes a plurality of slots, a heat exchanger core configured between the pair of header plates, and at least one housing plate configured on at least one side of the heat exchanger core to cover the heat exchanger core from at least one side. Opposite end portions of the at least one housing plate abut with the pair of header plates. In addition, each of the header plates comprises at least one lip extending from at least one side of the header plate and positioned over the corresponding abutting end portion of the at least one housing plate to hold the at least one housing plate. Besides, at least one lip can be in planar surface contact with the corresponding housing plate, wherein the planer surface contact can be realized mainly in a plane parallel to the extending plane of the at least one housing plate.

Further, for instance, the at least one lip can be a curved shaped projection projecting from the header. Each of the opposite end portions of the at least one housing plate can include an external fillet that abuts with a concave surface of the corresponding lip. For instance, a material of the at least one housing plate can be, but no limited to, aluminum, aluminum alloy or any other suitable metallic alloy, and the at least one housing plate may be brazed to the pair of header plates which can also be made of aluminum or aluminum alloy.

Each of the header plates further includes at least one locating projection projecting from the at least one side of the header plate and configured adjacent to the at least one lip to prevent further advancement of the at least one housing plate along a length of the at least one lip.

The disclosed heat exchanger can further include at least one closing plate configured on at least one side of the heat exchanger core adjacent to the at least one housing plate to cover the heat exchanger core from at least one side. Opposite transverse ends of the least one closing plate are received in corresponding slots, for instance, extreme upper and lower slots, of the pair of header plates and at least one longitudinal end of the at least one closing plate abuts with adjacent side of the at least one housing plate. Besides, the at least one housing plate and the at least one closing plate defines an enclosure/housing in which the heat exchanger core is encapsulated.

In addition, the at least one closing plate can include chamfers at the opposite transverse ends that can be adapted to be received in the slots of the heater plates. The chamfers at the opposite transverse ends can easier the assembly process of the corresponding closing plate with the header plates and ensure hermetic connection between the closing palate and the header plates. For instance, a material of the at least one closing plate can be aluminum, aluminum alloy or any other suitable metallic alloy, and the at least one closing plate may be brazed to the pair of header plates.

Further, a first fluid circuit is defined through the at least one housing plate, the heat exchanger core, the at least one closing plate, and the pair of header plates. In addition, the at least one housing plate may include an inlet port and an outlet port for ingress and egress, respectively, of a first fluid with respect to the first fluid circuit.

Furthermore, the first header plate with first internal plates and a first cover define a first manifold on one side of the heat exchanger core and the second header plate with second internal plates and a second cover define a second manifold on other side of the heat exchanger core opposite to the first manifold. In addition, at least one connection block can be connected to at least one of the first and second manifolds. The at least one connection block includes one or more openings fluidically connected to the respective manifold.

The heat exchanger core includes a plurality of tubes and a plurality of turbulators configured between two adjacent tubes of the plurality of tubes. The plurality of tubes are configured between the header plates such that opposite open ends of the tubes are received in the corresponding slots of the header plates.

Further, a second fluid circuit is defined through the at least one connection block, the first and second manifolds, and the plurality of tubes of the heat exchanger core.

Furthermore, each of the header plates may include a pair of clamping projections extending away from the heat exchanger core from two opposite ends, adjacent to the at least one lip, to hold the corresponding first and second internal plates and the first and second covers.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### BRIEF DESCRIPTION OF DRAWINGS

A appreciation of the invention and many of the attendant advantages thereof will be readily obtained as the same becomes better understood by reference to the following detailed description when considered in connection with the accompanying figures, wherein:
FIG. 1A illustrates an exploded view of a proposed heat exchanger in accordance with an embodiment of the present invention;
FIG. 1B illustrates an isometric view of the heat exchanger of FIG. 1A;
FIG. 2 illustrates a heat exchanger core fitted between header plates of the heat exchanger of FIG. 1A;
FIG. 3 illustrates the header plates with lips;
FIG. 4 illustrates a closing plate with chamfer at opposite ends of the heat exchanger of FIG. 1A;
FIG. 5 illustrates housing plates with external fillet at opposite ends;
FIG. 6 illustrates arrangement of lips of header plates with housing plates of the heat exchanger of FIG. 1A; and
FIG. 7 illustrates a sectional view depicting arrangement of the housing plate with the lip of the header plate.

### DETAILED DESCRIPTION

Embodiments of the present invention, explained in the forthcoming description and the accompanying drawings, relate to a heat exchanger, such as but not limited to chiller, for a motor vehicle. The disclosed heat exchanger has an aluminum housing defined through housing plates and closing plates, to encapsulate a heat exchanger core, which can overcome drawback of conventional plastic housings of existing R744 heat exchangers/chillers. Besides, the flat-to-flat connections are formed between the housing plates, header plates, and the closing plates, which can ensure no fluid leakage through the housing.

Further, the aluminum housing can be formed of smaller dimensions compared to the conventional plastic housing for same operating capacity of the heat exchanger, this provides better packaging, requires less space in the vehicle and reduces overall weight of the heat exchanger. Furthermore, as the disclosed aluminum housing is made though the aluminum housing plates and the aluminium closing plates, it may not require different moulds of specific dimensions in contrast to the conventional plastic housing, which reduces operations to manufacture the heat exchanger, thereby reducing the manufacturing cost.

Although, embodiments of the present invention are explained with example of a heat exchanger for the vehicles, however, the concept of the present invention or the heat exchanger of present invention is applicable for use in vehicular as well as non-vehicular environment for heat exchange between two fluids, and all such applications are within scope of the present invention without any limitations whatsoever.

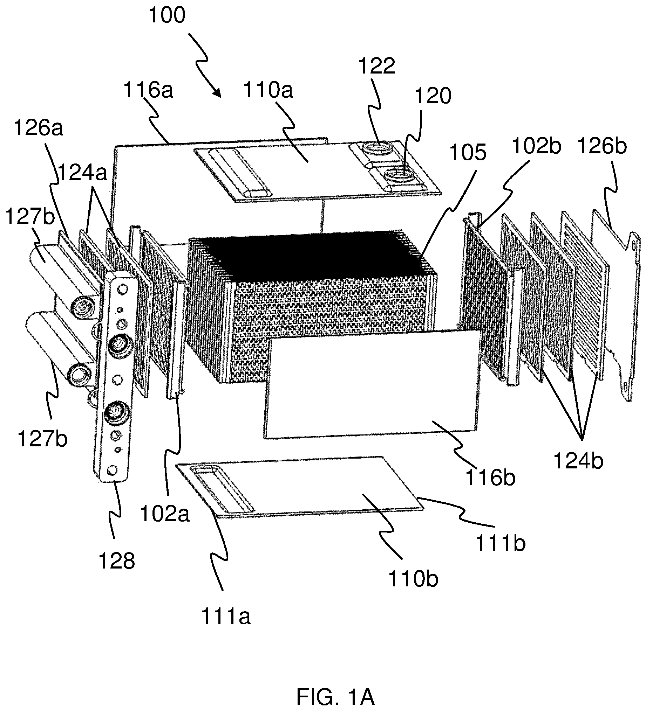

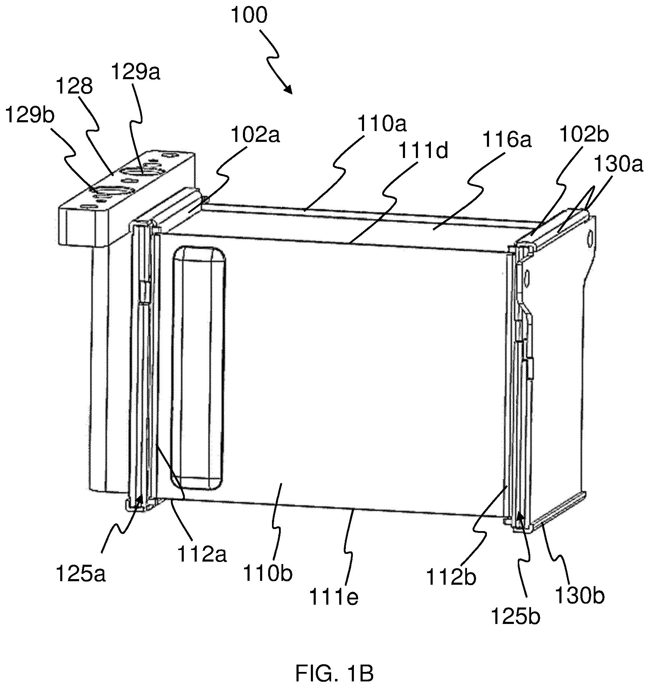

Referring to FIG. 1A to FIG. 2, in accordance with an embodiment, the present invention discloses a heat exchanger 100 including a pair of manifolds, including a first manifold 125a and a second manifold 125b, configured on two opposite sides of a heat exchanger core 105 which fluidically connects the two manifolds 125a and 125b. The first manifold 125a is defined through a first header plate 102a, first internal plates 124a and a first cover 126a, and the second manifold 125b is defined through a second header plate 102b, second internal plates 124b and a second cover 126b. In addition, each of the header plates 102a and 102b can include a pair of clamping projections 130a and 130b extending away from the heat exchanger core 105 from two opposite ends 132a and 132b, for instance, upper and lower ends. The clamping projections 130a and130b of each header plate 102, 102b are adapted to hold the corresponding internal plates 124a, 124b and the covers 126a, 126b of the respective manifold 125a, 125b. For instance, each of the clamping projections 130a and130b can be, but not limited to substantially L-shaped or any suitable curved shape, so that the clamping projections 130a and130b can collect the internal plates 124a, 124b and the cover 126a, 126b to stack.

Besides, each of the header plates 102a and 102b includes a plurality of slots 104 that are configured spaced apart along length of the respective header plates 102a and 102b. The heat exchanger core 105 includes a plurality of tubes 106 arranged one over another with a plurality of turbulators 108 configured between two adjacent tubes 106, in another words, the tubes 108 are placed in the core 105 alternately with the turbulators 108. Besides, opposite open ends of the tubes 106 are received in the corresponding slots 104 of the header plates 102a and 102b. Each of the slots 104 arranged with the tubes 106 can have a chamfer to make the assembly process with the tubes 106 easier.

The disclosed heat exchanger 100 further includes at least one housing plate, such as housing plates 110a and 110b, configured on two opposite side of the heat exchanger core 105 to cover the heat exchanger core 105 from the two opposite sides that corresponds to shortest side walls of the tubes 106. Opposite end portions 111a and 111b of the housing plates 110a and 110b abut with the pair of header plates 102a and 102b along the length of the header plates. Besides, the header plates 102a and 102b can have flat surfaces which can be in contact with flat end surfaces of the opposite end portions 111a and 111b of the housing plates 110a and 110b.

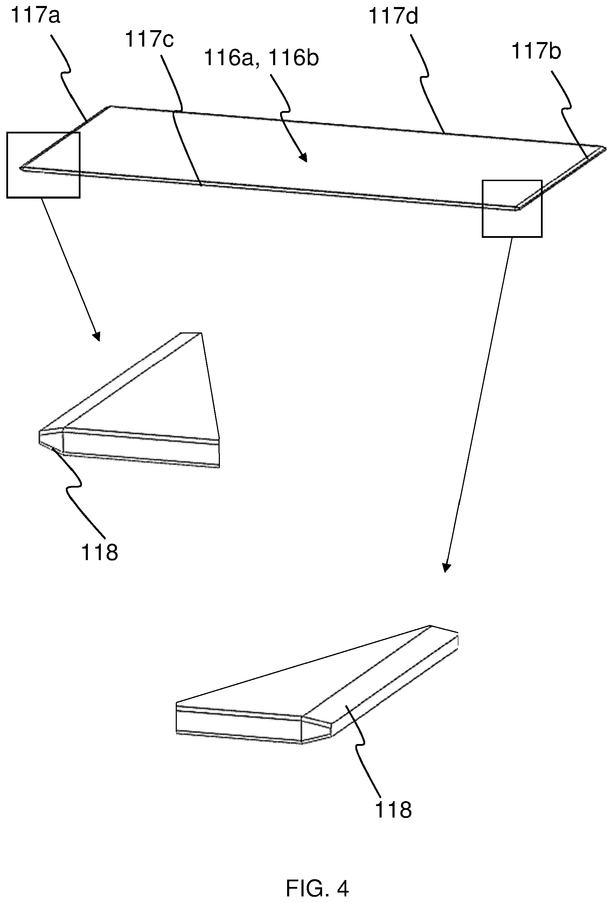

In addition, at least one closing plate, such as closing plates 116a and 116b, can be configured on other two side of the heat exchanger core 105 adjacent to the housing plates 110a and 110b to cover the heat exchanger core 105 from other two sides that corresponds to longest side walls of the tubes 106. Opposite transverse ends 117a and 117b of the closing plates 116a and 116b can be received in corresponding slots 104, for instance, extreme upper and lower slots 104, of the header plates 102a and 102b. Besides, longitudinal ends 117c and 117d of the closing plates 116a and 116b abut with adjacent sides 111d and 111e of the housing plates 110a and 110b. In addition, as shown in FIG. 4, each of the closing plates 116a and 116b includes chamfers 118 at the opposite transverse ends 117a and 117b that are adapted to be received in the respective slots 104 of the heater plates 102a and 102b. The chamfers 118 at the opposite transverse ends 117a and 117b can easier the assembly process of the closing plates 116a and 116b with the header plates 102a and 102b and ensure hermetic connection between the closing palates 116a and116b and the header plates 102a and 102b.

In addition, for instance, a material of the housing plates 110a and 110b and the closing plates 116a and 116b can be aluminum, aluminum alloy or any other suitable alloy. The housing plates 110a and 110b and the closing plates 116a and 116b can be joined at the adjoining surfaces through a suitable joining process such as brazing, to define a leak-proof housing to encapsulate the heat exchanger core 105. The housing/cover created by the housing plates 110a and 110b and the closing plates 116a and 116b can be closed by the header plates 102a and 102b on two opposite ends. The housing plates 110a and 110b and the closing plates 116a and 116b can be brazed to the header plates 102a and 102b. For instance, whole assembly of the heat exchanger 100 can be brazed together. Besides, the housing plates 110a and 110b and the closing plates 116a and 116b with the header plates 102a and 102b ensure hermetic connections and ensure no leakage of fluid of the heat exchanger 100.

In addition, the disclosed heat exchanger 100 can further include at least one connection block, such as but not limited to a connection block 128, that can be connected to at least one of the two manifolds 125a and125b. The connection block 128 comprises one or more openings, such as an inlet opening 129a and an outlet opening 129b, which are configured in fluidic commination with canals, such as, canals 127a and 127b, of the first manifold 125a. For instance, the canals 127a can be an inlet canal and the canals 127b can be an outlet canal for ingress and egress of a fluid through the manifold. In an alternate embodiment, for instance, two connecting blocks can be provided on the two manifolds 125a and125b, in that case the inlet canal and the outlet canal can be provided in the two different manifolds 125a and 125b.

Further, a first fluid circuit can be defined through the housing plates 110a and 110b, the heat exchanger core 105, the closing plates 116a and116b and header plates 102a and 102b. In addition, one of the housing plates, such as, the housing plate 110a can be provided with an inlet port 120 for ingress of a first fluid and an outlet port 122 for egress of the first fluid with respect to the first fluid circuit. The first fluid can be, but not limited to, water. In an alternate embodiment, the inlet port 120 and the outlet port 122 can be configured on the different housing plates, for instance, the inlet port 120 can be provide on one housing plate 110a and the outlet port 122 can be provided on the other housing plate 110b.

Furthermore, a second fluid circuit can be defined through connection block 128, the two manifolds 125a, 125b, and the plurality of tubes 106. The second fluid that can be a refrigerant, such as but not limited to R744, also commonly known as refers as CO2, that circulates though the second fluid circuit to cool the first fluid circulating through the first fluid circuit.

Besides, the plurality of turbulators 108 are adapted for creating turbulence in the flow of the first fluid or water, passing through them. The shape of the turbulators 108 is such that turbulence is created in the first fluid flow passing through the turbulators, in another words, the function of the turbulators 108 is to transform a laminar flow of the first fluid into a turbulent one, which, in turn, increases the heat exchange efficiency of the heat exchanger 100.

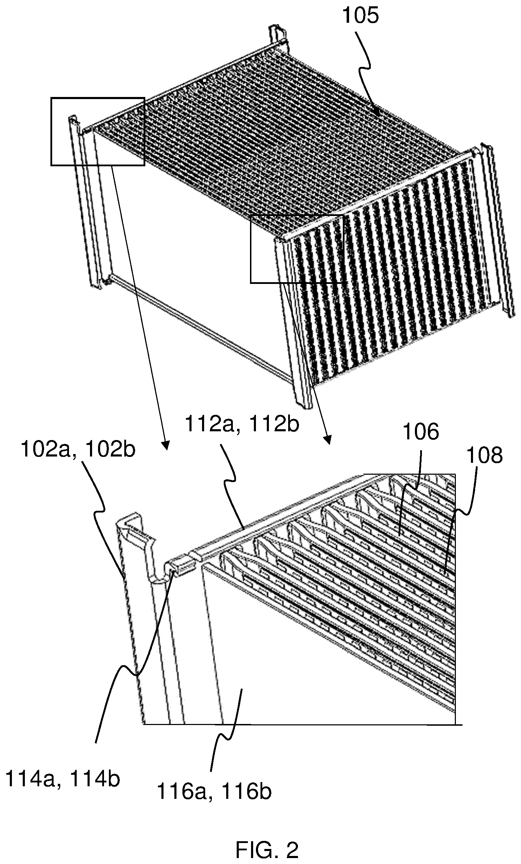

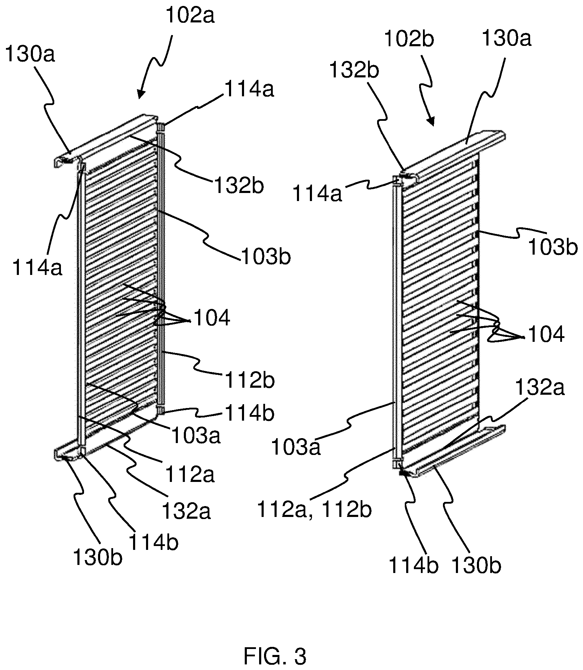

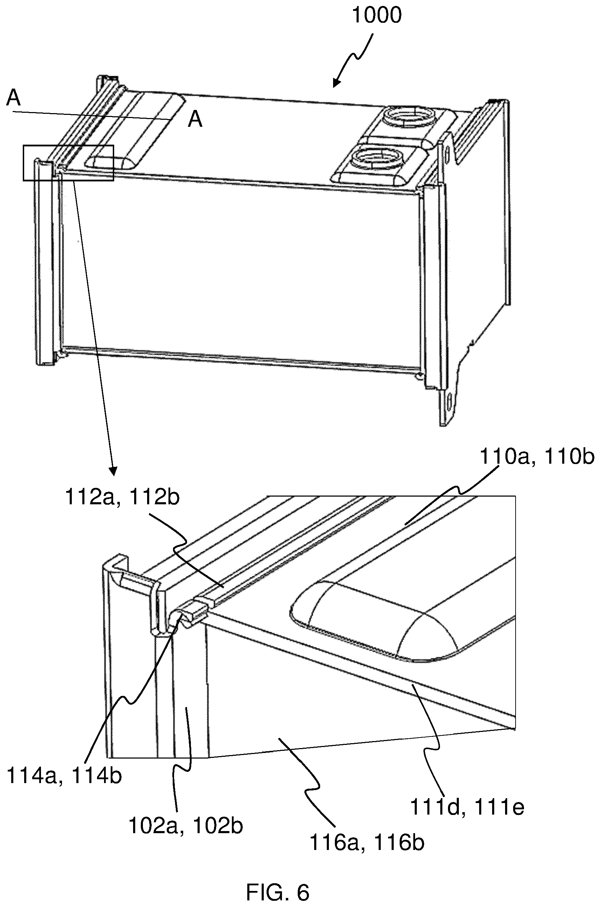

Referring to FIG. 2 to FIG. 7, each of the header plates 102a and 102b includes at least one lip, such as lips 112a and 112b, extending from sides 103a and 103b of the corresponding header plates 102a, 102b. For instance, as shown in FIG. 3, each of the header plates 102a and 102b can include two lips 112a and 112b that are extending from the two sides 103a and 103b that can be opposite longitudinal sides of the header plate 102a, 102b. The lips 112a and 112b are adapted to be positioned over top surfaces of the end portions 111a and 111b of the housing plates 110a and 110b to hold the housing plates 110a 110b. While assembly process, the housing plates 110a and 110b can be inserted in the lips 112a and 112b of the header plates 102a and 102b. The lips 112a and 112b can help to ensure the correct position of the housing plates 110a and 110b with respect to the header plates 102a and 102b before the brazing process. For instance, each of the lips 112a and 112b may be a curved shaped projection projecting from the two opposite longitudinal sides of the respective header plate 102a, 102b.

In addition, the lips 112a and 112b of each header plate 102a, 102b can be in planar surface contact with the corresponding housing plate 110a, 110b. The planer surface contact can be realized mainly in a plane parallel to the extending plane of the housing plates 110a, 110b, in another words, the inner flat surface of each lips 112a, 112b can make contact with flat-upper surface of the corresponding housing plate 110a, 110b along length of the lip 112a, 112b.

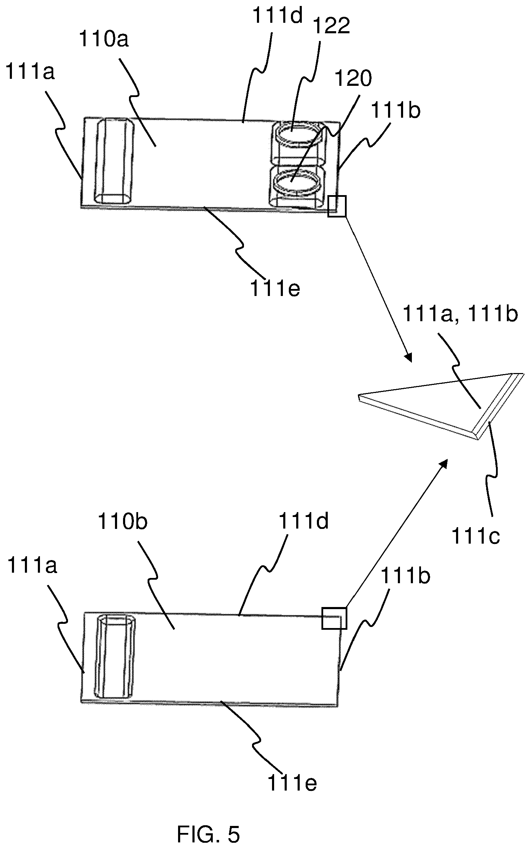

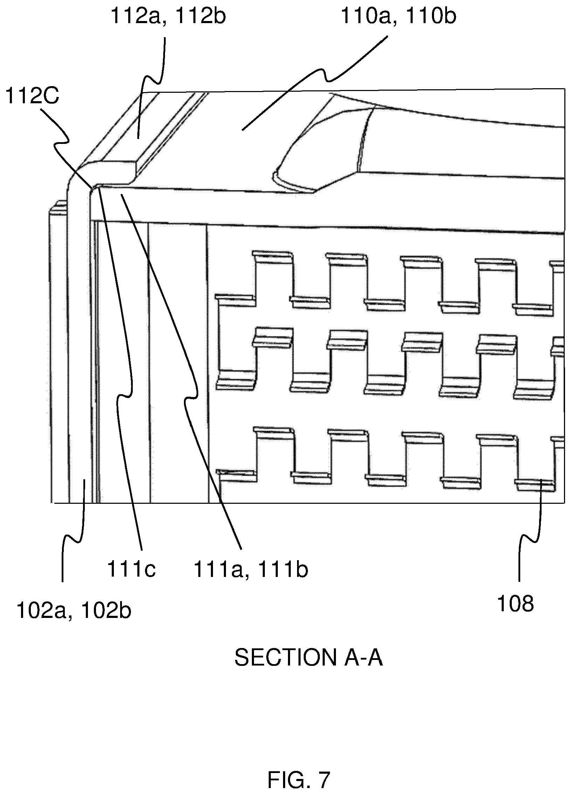

In addition, as shown in FIG. 5, the opposite end portions 111a and 111b of the housing plates 110a and 110b can include an external fillet 111c. The fillets 111c are adapted to abut with concave surface 112c of the corresponding lips 112a and 112b, as shown in FIG. 7, to ensure effective contact between the header plates 102a and 102b and the housing plates 110a and 110b.

Further, each of the header plates 102a and 102b can include locating projections 114a and 114b projecting from each of the sides 103a and 103b and located adjacent to the lips 112a and 112b, as shown in FIG. 3. For instance, two locating projections 114a and 114b can be provided on each of the sides 103a and 103b of the header plate 102a, 102b. The locating projections 114a and 114b are adapted to prevent further advancement of the housing plates 110a and 110b along the length of the respective lips 112a and 112b before breezing process, in other words, the locating projections 114a and 114b can prevent movement of the each of the housing plates 110a and 110b along an axis extending parallel to the length of the lip 112a, 112b and help to keep the housing plates 110a and 110b in place before brazing process.

## Claims

1. A heat exchanger (100) comprising:
a pair of header plates (102a, 102b), including a first header plate (102a) and a second header plate (102b), configured spaced apart, each of the header plates (102a,102b) comprises a plurality of slots (104);
a heat exchanger core (105); and
at least one housing plate (110a, 110b) configured on at least one side of the heat exchanger core (105) to cover the heat exchanger core (105) from at least one side, wherein opposite end portions (111a, 111b) of the at least one housing plate (110a, 110b) abut with the pair of header plates (102a, 102b);
wherein
each of the header plates (102a, 102b) comprises at least one lip (112a, 112b) extending from at least one side (103a, 103b) of the header plate (102a, 102b) and positioned over the corresponding end portion (111a, 111b) of the at least one housing plate (110a, 110b) to hold the at least one housing plate (110a, 110b), **characterized in that**
each of the header plates (102a, 102b) further comprises at least one locating projection (114a, 114b) projecting from the at least one side (103a, 103b) of the header plate (102a, 102b) and configured adjacent to the at least one lip (112a, 112b) to prevent further advancement of the at least one housing plate (110a, 110b) along a length of the at least one lip (112a, 112b).

2. The heat exchanger (100) as claimed in the preceding claim, wherein each of the opposite end portions (111a, 111b) of the at least one housing plate (110a, 110b) comprises an external fillet (111c) that abuts with a concave surface (112c) of the corresponding lip (112a, 112b).

3. The heat exchanger (100) as claimed in any of the preceding claims, wherein at least one lip (112a, 112b) is in planar surface contact with the corresponding housing plate (110a, 110b), the planer surface contact being realized mainly in a plane parallel to the extending plane of the at least one housing plate (110a, 110b).

4. The heat exchanger (100) as claimed in any of the preceding claims, further comprises at least one closing plate (116a, 116b) configured on at least one side of the heat exchanger core (105) adjacent to the at least one housing plate (110a, 110b) to cover the heat exchanger core (105) from at least one side, wherein opposite transverse ends (117a, 117b) of the least one closing plate (116a, 116b) are received in corresponding slots (104) of the pair of header plates (102a, 102b) and at least one longitudinal end (117c, 117d) of the at least one closing plate (116a, 116b) abuts with adjacent side (111d, 111e) of the at least one housing plate (110a, 110b).

5. The heat exchanger (100) as claimed in the preceding claim, wherein the at least one closing plate (116a, 116b) comprises chamfers (118) at the opposite transverse ends (117a, 117b).

6. The heat exchanger (100) as claimed in any of the preceding claims, further comprises a first fluid circuit defined through the at least one housing plate (110a, 110b), the heat exchanger core (105), the at least one closing plate (116a, 116b) and the pair of header plates (102a, 102b).

7. The heat exchanger (100) as claimed in any of the preceding claims, wherein the at least one housing plate (110a, 110b) comprises an inlet port (120) and an outlet port (122) for ingress and egress, respectively, of a first fluid with respect to the first fluid circuit.

8. The heat exchanger (100) as claimed in any of the preceding claims, wherein the first header plate (102a) with first internal plates (124a) and a first cover (126a) define a first manifold (125a) on one side of the heat exchanger core (105), and wherein the second header plate (102b) with second internal plates (124b) and a second cover (126b) define a second manifold (125a) on other side, opposite to the first manifold (125a), of the heat exchanger core (105) .

9. The heat exchanger (100) as claimed in any of the preceding claims, wherein the heat exchanger core (105) comprises a plurality of tubes (106) and a plurality of turbulators (108) configured between two adjacent tubes of the plurality of tubes (106), and wherein the plurality of tubes (106) being configured between the header plates (102a, 102b) such that opposite ends of the tubes (106) are received in the corresponding slots (104) of the header plates (102a, 102b).

10. The heat exchanger (100) as claimed in any of the preceding claims, wherein each of the header plates (102a, 102b) comprises a pair of clamping projections (130a, 130b) extending away from the heat exchanger core (105) from two opposite ends (132a, 132b), adjacent to the at least one lip (112a, 112b), to hold the corresponding first and second internal plates (124a, 124b) and the first and second covers (126a, 126b).

## Patentansprüche

1. Ein Wärmetauscher (100), umfassend: ein Paar von Kopfplatten (102a, 102b), umfassend eine erste Kopfplatte (102a) und eine zweite Kopfplatte (102b), die voneinander beabstandet angeordnet sind, wobei jede der Kopfplatten (102a, 102b) eine Vielzahl von Schlitzen (104) umfasst; einen Wärmetauscherkern (105); und mindestens eine Gehäuseplatte (110a, 110b), die an mindestens einer Seite des Wärmetauscherkerns (105) konfiguriert ist, um den Wärmetauscherkern (105) von mindestens einer Seite abzudecken, wobei gegenüberliegende Endabschnitte (111a, 111b) der mindestens einen Gehäuseplatte (110a, 110b) an dem Paar von Kopfplatten (102a, 102b) anliegen; wobei jede der Kopfplatten (102a, 102b) umfasst mindestens eine Lippe (112a, 112b), die sich von mindestens einer Seite (103a, 103b) der Kopfplatte (102a, 102b) erstreckt und über dem entsprechenden Endabschnitt (111a, 111b) der mindestens einen Gehäuseplatte (110a, 110b) positioniert ist, um die mindestens eine Gehäuseplatte (110a, 110b) zu halten, **dadurch gekennzeichnet, dass** jede der Kopfplatten (102a, 102b) ferner mindestens einen Positionierungsvorsprung (114a, 114b) umfasst, der von der mindestens einen Seite (103a, 103b) der Kopfplatte (102a, 102b) vorsteht und angrenzend an die mindestens eine Lippe (112a, 112b) konfiguriert ist, um ein weiteres Vorschieben der mindestens einen Gehäuseplatte (110a, 110b) entlang einer Länge der mindestens einen Lippe (112a, 112b) zu verhindern.

2. Der Wärmetauscher (100) nach dem vorhergehenden Anspruch, wobei jeder der gegenüberliegenden Endabschnitte (111a, 111b) der mindestens einen Gehäuseplatte (110a, 110b) eine äußere Verrundung (111c) umfasst, die an einer konkaven Oberfläche (112c) der entsprechenden Lippe (112a, 112b) anliegt.

3. Der Wärmetauscher (100) nach einem der vorhergehenden Ansprüche, wobei mindestens eine Lippe (112a, 112b) in planarer Oberflächenkontakt mit der entsprechenden Gehäuseplatte (110a, 110b) steht, wobei der planare Oberflächenkontakt hauptsächlich in einer Ebene parallel zur Verlängerungsebene der mindestens einen Gehäuseplatte (110a, 110b) realisiert wird.

4. Der Wärmetauscher (100) nach einem der vorhergehenden Ansprüche umfasst ferner mindestens eine Verschlussplatte (116a, 116b), die an mindestens einer Seite des Wärmetauscherkerns (105) angrenzend an die mindestens eine Gehäuseplatte (110a, 110b) konfiguriert ist, um den Wärmetauscherkern (105) von mindestens einer Seite abzudecken, wobei gegenüberliegende Querenden (117a, 117b) der mindestens einen Verschlussplatte (116a, 116b) in entsprechenden Schlitzen (104) des Paares von Kopfplatten (102a, 102b) aufgenommen sind und mindestens ein Längsende (117c, 117d) der mindestens einen Verschlussplatte (116a, 116b) an der angrenzenden Seite (111d, 111e) der mindestens einen Gehäuseplatte (110a, 110b) anliegt.

5. Der Wärmetauscher (100) nach dem vorhergehenden Anspruch, wobei die mindestens eine Verschlussplatte (116a, 116b) Fasen (118) an den gegenüberliegenden Querenden (117a, 117b) umfasst.

6. Der Wärmetauscher (100) nach einem der vorhergehenden Ansprüche umfasst ferner einen ersten Fluidkreislauf, der durch die mindestens eine Gehäuseplatte (110a, 110b), den Wärmetauscherkern (105), die mindestens eine Verschlussplatte (116a, 116b) und das Paar von Kopfplatten (102a, 102b) definiert ist.

7. Der Wärmetauscher (100) nach einem der vorhergehenden Ansprüche, wobei die mindestens eine Gehäuseplatte (110a, 110b) einen Einlassanschluss (120) und einen Auslassanschluss (122) für den Eintritt bzw. Austritt eines ersten Fluids in Bezug auf den ersten Fluidkreislauf umfasst.

8. Der Wärmetauscher (100) nach einem der vorhergehenden Ansprüche, wobei die erste Kopfplatte (102a) mit ersten Innenplatten (124a) und einer ersten Abdeckung (126a) einen ersten Verteiler (125a) auf einer Seite des Wärmetauscherkerns (105) definiert, und wobei die zweite Kopfplatte (102b) mit zweiten Innenplatten (124b) und einer zweiten Abdeckung (126b) einen zweiten Verteiler (125a) auf der anderen Seite, gegenüber dem ersten Verteiler (125a), des Wärmetauscherkerns (105) definiert.

9. Der Wärmetauscher (100) nach einem der vorhergehenden Ansprüche, wobei der Wärmetauscherkern (105) eine Vielzahl von Rohren (106) und eine Vielzahl von Turbulatoren (108) umfasst, die zwischen zwei benachbarten Rohren der Vielzahl von Rohren (106) konfiguriert sind, und wobei die Vielzahl von Rohren (106) zwischen den Kopfplatten (102a, 102b) so konfiguriert ist, dass die gegenüberliegenden Enden der Rohre (106) in den entsprechenden Schlitzen (104) der Kopfplatten (102a, 102b) aufgenommen sind.

10. Der Wärmetauscher (100) nach einem der vorhergehenden Ansprüche, wobei jede der Kopfplatten (102a, 102b) ein Paar von Klemmvorsprüngen (130a, 130b) umfasst, die sich von dem Wärmetauscherkern (105) von zwei gegenüberliegenden Enden (132a, 132b) angrenzend an die mindestens eine Lippe (112a, 112b) erstrecken, um die entsprechenden ersten und zweiten Innenplatten (124a, 124b) und die ersten und zweiten Abdeckungen (126a, 126b) zu halten.

## Revendications

1. Un échangeur de chaleur (100) comprenant : une paire de plaques collectrices (102a, 102b), comprenant une première plaque collectrice (102a) et une seconde plaque collectrice (102b), configurées espacées l'une de l'autre, chacune des plaques collectrices (102a, 102b) comprenant une pluralité de fentes (104) ; un corps d'échangeur de chaleur (105) ; et au moins une plaque de logement (110a, 110b) configurée sur au moins un côté du corps d'échangeur de chaleur (105) pour couvrir le corps d'échangeur de chaleur (105) d'au moins un côté, dans lequel les parties d'extrémité opposées (111a, 111b) de la au moins une plaque de logement (110a, 110b) viennent en butée avec la paire de plaques collectrices (102a, 102b) ; dans lequel chacune des plaques collectrices (102a, 102b) comprend au moins une lèvre (112a, 112b) s'étendant d'au moins un côté (103a, 103b) de la plaque collectrice (102a, 102b) et positionnée sur la partie d'extrémité correspondante (111a, 111b) de la au moins une plaque de logement (110a, 110b) pour maintenir la au moins une plaque de logement (110a, 110b), **caractérisé en ce que** chacune des plaques collectrices (102a, 102b) comprend en outre au moins une projection de positionnement (114a, 114b) faisant saillie d'au moins un côté (103a, 103b) de la plaque collectrice (102a, 102b) et configurée adjacente à la au moins une lèvre (112a, 112b) pour empêcher un avancement supplémentaire de la au moins une plaque de logement (110a, 110b) le long d'une longueur de la au moins une lèvre (112a, 112b).

2. L'échangeur de chaleur (100) selon la revendication précédente, dans lequel chacune des parties d'extrémité opposées (111a, 111b) de la au moins une plaque de logement (110a, 110b) comprend un congé externe (111c) qui vient en butée avec une surface concave (112c) de la lèvre correspondante (112a, 112b).

3. L'échangeur de chaleur (100) selon l'une quelconque des revendications précédentes, dans lequel au moins une lèvre (112a, 112b) est en contact de surface plane avec la plaque de logement correspondante (110a, 110b), le contact de surface plane étant réalisé principalement dans un plan parallèle au plan d'extension de la au moins une plaque de logement (110a, 110b).

4. L'échangeur de chaleur (100) selon l'une quelconque des revendications précédentes, comprend en outre au moins une plaque de fermeture (116a, 116b) configurée sur au moins un côté du corps d'échangeur de chaleur (105) adjacente à la au moins une plaque de logement (110a, 110b) pour couvrir le corps d'échangeur de chaleur (105) d'au moins un côté, dans lequel les extrémités transversales opposées (117a, 117b) de la au moins une plaque de fermeture (116a, 116b) sont reçues dans des fentes correspondantes (104) de la paire de plaques collectrices (102a, 102b) et au moins une extrémité longitudinale (117c, 117d) de la au moins une plaque de fermeture (116a, 116b) vient en butée avec le côté adjacent (111d, 111e) de la au moins une plaque de logement (110a, 110b).

5. L'échangeur de chaleur (100) selon la revendication précédente, dans lequel la au moins une plaque de fermeture (116a, 116b) comprend des chanfreins (118) aux extrémités transversales opposées (117a, 117b).

6. L'échangeur de chaleur (100) selon l'une quelconque des revendications précédentes, comprend en outre un premier circuit fluidique défini à travers la au moins une plaque de logement (110a, 110b), le corps d'échangeur de chaleur (105), la au moins une plaque de fermeture (116a, 116b) et la paire de plaques collectrices (102a, 102b).

7. L'échangeur de chaleur (100) selon l'une quelconque des revendications précédentes, dans lequel la au moins une plaque de logement (110a, 110b) comprend un orifice d'entrée (120) et un orifice de sortie (122) pour l'entrée et la sortie, respectivement, d'un premier fluide par rapport au premier circuit fluidique.

8. L'échangeur de chaleur (100) selon l'une quelconque des revendications précédentes, dans lequel la première plaque collectrice (102a) avec des plaques internes (124a) et un premier couvercle (126a) définissent un premier collecteur (125a) sur un côté du corps d'échangeur de chaleur (105), et dans lequel la seconde plaque collectrice (102b) avec des plaques internes (124b) et un second couvercle (126b) définissent un second collecteur (125a) sur l'autre côté, opposé au premier collecteur (125a), du corps d'échangeur de chaleur (105).

9. L'échangeur de chaleur (100) selon l'une quelconque des revendications précédentes, dans lequel le corps d'échangeur de chaleur (105) comprend une pluralité de tubes (106) et une pluralité de turbulateurs (108) configurés entre deux tubes adjacents de la pluralité de tubes (106), et dans lequel la pluralité de tubes (106) étant configurée entre les plaques collectrices (102a, 102b) de telle sorte que les extrémités opposées des tubes (106) sont reçues dans les fentes correspondantes (104) des plaques collectrices (102a, 102b).

10. L'échangeur de chaleur (100) selon l'une quelconque des revendications précédentes, dans lequel chacune des plaques collectrices (102a, 102b) comprend une paire de projections de serrage (130a, 130b) s'étendant à l'écart du corps d'échangeur de chaleur (105) depuis deux extrémités opposées (132a, 132b), adjacentes à la au moins une lèvre (112a, 112b), pour maintenir les première et seconde plaques internes (124a, 124b) et les premier et second couvercles (126a, 126b) correspondants.
